# EUROPEAN PATENT SPECIFICATION

(11) **EP 0 358 531 B1**
(45) Date of publication and mention of the grant of the patent: **02.03.1994**
(21) Application number: 89309165.2
(22) Date of filing: 08.09.1989
(51) Int. Cl.: B23Q 5/20, B23Q 15/26, G05B 19/18

(54) **Workpiece spindle control unit and control method**
Werkstückspindel-Steuereinheit und Steuerverfahren
Unité de commande de buche porte pièce et méthode de commande

(30) Priority: 09.09.1988 JP 226090/88; 09.09.1988 JP 226091/88
(43) Date of publication of application: 14.03.1990
(73) Proprietor: YAMAZAKI MAZAK KABUSHIKI KAISHA, Niwa-gun Aichi-ken (JP)
(72) Inventor: Muraki, Toshiyuki, Nagoya-shi Aichi-ken (JP); Inami, Sumiaki, Fusocho Niwa-gun Aichi-ken (JP)
(74) Representative: Sturt, Clifford Mark

(56) References cited:
- EP-A- 0 135 754
- EP-A- 0 272 825
- DE-A- 3 621 460
- DE-C- 744 429
- DE-U- 6 917 979
- DE-U- 7 102 263

## Description

The present invention relates to a workpiece spindle control unit and a control method suitable for applying to a workpiece spindle capable of performing C-axis control machining with a workpiece held as described for example in EP-A-0135754 defining the closest prior art.

It is known these days to be able to indexing a workpiece spindle with high speed and high accuracy in case of C-axis control in such a manner that a workpiece spindle is directly connected with a workpiece spindle motor and a workpiece spindle is directly rotated and driven by a workpiece spindle motor in a complex machining machine tool capable of performing turning and C-axis control machining.

In such a machine tool, it is frequent to take a method of performing machining by fixing a workpiece spindle on a predetermined C-axis angular position according to C-axis control in case of milling and the like. In this case, a workpiece spindle is fixed by using a clamping means comprising a brake installed in a workpiece spindle, and the like. On this occasion, a workpiece spindle is shifted from an angular position originally positioned by unbalanced contacting of brake friction pads during clamping owing to the assembly accuracy of a clamping unit. This means deterioration in machining accuracy. In the clamping by a clamping unit, when a spindle driving motor, that is, a workpiece spindle is clamped driving a position loop in servo-control, excessive current flows in a motor in order to absorb the servo positioning error and a motor overheats. This method is open to objection. It is thinkable to control by cutting a servo during clamping in order to prevent such a thing. When a servo is cut, it is impossible to return to a correct C-axis position without performing an origin reversion movement in unclamping. Moreover, such a method is also used that an only rotation signal is detected from a rotation detector side after the clamping of a motor and the control according to the rotation signal isn't performed during clamping, but after unclamping of a motor. This control method needs complex control procedures such as switching of a servo between ON and OFF, the chasing of a rotation signal. Therefore, it is inconvenient.

DE-U-6917979 discloses a number of types of fixing apparatus for bringing the shaft and machine tool to a controlled standstill. The various devices disclosed include an arrangement in which an additional motor acts by way of a pivot mechanism on the outer part of a multiple-disc coupling; the use of an actuating apparatus with a displaceable bushing for engaging in the guide groove of a switch bushing provided on a rotary spindle; the use of drive couplings and brakes provided on a spindle; and a pressurised friction coupling. Each of these systems can be complicated and expensive to utilise and none of them serves to reduce excessive current flow in the spindle driving motor.

An object of the present invention is to provide a workpiece spindle control unit capable of clamping at a correct angular position and its control method.

A further object of the present invention is to provide a workpiece spindle control unit and its control method for which an origin reversion movement is unnecessary in unclamping of a spindle driving motor and complex control procedures such as the switching of a servo between ON and OFF are also needless.

According to a first aspect of the invention there is provided a workpiece spindle control unit, comprising:
a workpiece spindle;
a workpiece spindle motor having a normal rated operating torque directly connected with said workpiece spindle for driving said workpiece spindle;
a turning angle detecting means for detecting the turning angle of said workpiece spindle;
a servo control means for controlling the turning angle of said workpiece spindle by controlling said workpiece spindle motor in response to a signal from said turning angle detecting means: and
a clamping means for clamping said workpiece spindle in a stopping condition or to frictionally turn said workpiece spindle with angular control by engaging with said workpiece spindle;
said control unit comprises
command means for commanding said servo control means to reduce the torque of said workpiece spindle motor below the said normal rated operating torque while said clamping means clampingly engages said workpiece spindle to control the rotation of said workpiece spindle.

The present invention therefore allows that the position shear of a workpiece spindle owing to the unbalance contracting of brake means can be prevented in such a manner that a clamping unit is driven weakening clamp power at the beginning of clamping, in which the clamp power of a brake means is unbalanced. Then, clamping can be correctly performed.

And, with such a constitution that a supply means of lubricating oil, such as a lubricating device is connected with a clamping unit, it is possible to considerably reduce the coefficient of friction between a brake means and a workpiece spindle. Therefore, the position shear of a workpiece spindle owing to the unbalance contacting by brake means can be narrower.

And, with such a constitution that a workpiece spindle is provided, a clamping means, such as a clamping unit having a brake means, such as plural brake friction pads capable of clamping the rotation of the workpiece spindle is provided for the workpiece spindle, when a workpiece spindle is clamped in case of C-axis control, the contact is performed with the first clamp power until all brake means is contacted with a workpiece spindle and with the second clamp power stronger than said first clamp power after said all brake means is contacted with the workpiece spindle. Accordingly, the positioning of a workpiece spindle can be performed without the position shear of a workpiece spindle in case of C-axis control.

According to a second aspect of the invention, there is provided a method for controlling a workpiece spindle, in combination with a workpiece spindle motor, having a normal rated operating torque, directly connected with said workpiece spindle for driving said workpiece spindle; a turning angle detecting means, for detecting the turning angle of said workpiece spindle; a servo control means, for controlling the turning angle of said workpiece spindle by controlling said workpiece spindle motor in response to a signal from said turning angle detecting means; and a clamping means for clamping said workpiece spindle in a stopping condition or to frictionally turn said workpiece spindle with angular control by engaging with said workpiece spindle; comprising the steps of:
(i) clamping said workpiece spindle and said workpiece spindle motor with said clamping means by actuating said clamping means;
(ii) controlling the turning angle of said workpiece spindle with said servo control means, while said workpiece spindle and workpiece spindle motor are being clampingly engaged by said clamping means in response to a signal from said turning angle detecting means, to maintain said workpiece spindle at a predetermined angular position; and
(iii) reducing the torque of said workpiece spindle motor below the normal rated operating torque of said workpiece spindle motor, whereby overheating of said workpiece spindle motor is prevented.

Preferably, a workpiece spindle control unit comprises a workpiece spindle and a workpiece spindle motor directly connected with the workpiece spindle, a turning angle detector for detecting the turning angle of a workpiece spindle provided for said workpiece spindle, a servo control means such as a workpiece spindle motor controller, for controlling the C-axis turning angle of said workpiece spindle motor according to the signal from the turning angle detector, a clamping means such as a clamping unit for clamping said workpiece spindle and a clamping unit control portion and a command means such as an axis control portion, for commanding said servo control means to reduce the torque of a workpiece spindle motor in comparison with an usual rating torque while the clamping means is clamping the rotation of a workpiece spindle. In case where a workpiece spindle is clamped at a predetermined anglular position in case of C-axis control, the torque of a workpiece spindle motor is reduced in comparison with an usual rating torque without release of the control state of a workpiece spindle motor by a servo control means. Accordingly, there is no possibility of the overheat of a workpiece spindle motor on the assumption that a workpiece spindle motor in clamping state is driven and controlled by a servo control means on the basis of servo error. And, since a servo control means can be always worked during the clamping of a workpiece spindle, an origin reversion movement is unnecessary and complex control procedures, such as ON-OFF switching of a servo control are also unnecessary in case of the clamping and unclamping of a workpiece spindle.

And, a workpiece spindle control unit comprises a workpiece spindle and a workpiece spindle motor directly connected with the workpiece spindle, a turning angle detector for detecting the turning angle of a workpiece spindle provided for said workpiece spindle, a servo control means such as a workpiece spindle motor controller, for controlling the C-axis turning angle of said workpiece spindle motor according to the signal from the turning angle detector and a clamping means, such as a clamping unit for clamping said workpiece spindle and a clamping unit control portion; in case where the workpiece spindle is fixed at a predetermined angular position in case of C-axis control, the workpiece spindle is clamped together with the workpiece spindle motor by driving said clamping means and the control of the workpiece spindle motor is continued by said servo control means, and the torque of a workpiece spindle motor is reduced in comparison with an usual rating torque to prevent the overheat of the workpiece spindle motor. Accordingly, a workpiece spindle can be clamped remaining a servo control ON by limitation of the torque of the workpiece spindle motor.

Embodiments of the invention will now be described by way of example only and with reference to the accompanying drawings, in which
Fig.1 is a control block diagram for showing an example of a complex machining machine tool to which the present invention is applied;
Fig.2 is a view in the direction of the arrow II in a clamping unit portion in Fig.1;
Fig.3 is a plan view of Fig.2;
Fig.4 is a hydraulic circuit diagram for showing details of a hydraulic power switching unit;
Fig.5 is a chart for showing the control sequence of each valve;
Fig.6 is a flowchart for showing an example of clamp control program;
Fig.7 (a) is a control block diagram for showing an example of a complex machining machine tool to which the present invention is applied and (b) is a view for showing an example of a workpiece end face to be machined;
Fig.8 is a chart for showing an example of machining program;
Fig.9 is a timing chart for showing the timing of each control movement;
Fig.10 is a chart for showing an example of a machine tool to which an example of a rotation shaft control unit for machine tool is applied;
Fig.11 is a diagram for showing an example of hydraulic circuit of a rotation shaft control unit as shown in Fig.10; and
Fig.12 is a chart for showing a hydraulic power decision table stored in hydraulic power decision table memory of a rotation axis control unit for machine tool.

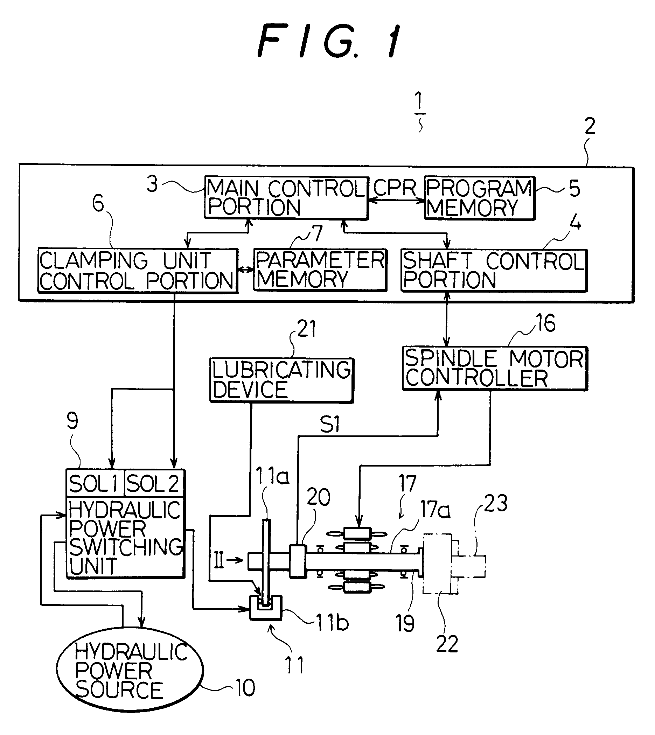

A complex machining machine tool 1 has an NC unit 2 as shown in Fig.1. A main control portion 3 is provided for the NC unit 2. A program memory 5, a shaft control portion 4, a clamping unit control portion 6 and the like are provided for the main control portion 3. A parameter memory 7 and a hydraulic power switching unit 9 connected with the clamping unit control portion 6 and a hydraulic power source 10, such as a hydraulic pump, and a clamping unit 11 connect with the hydraulic power switching unit 9.

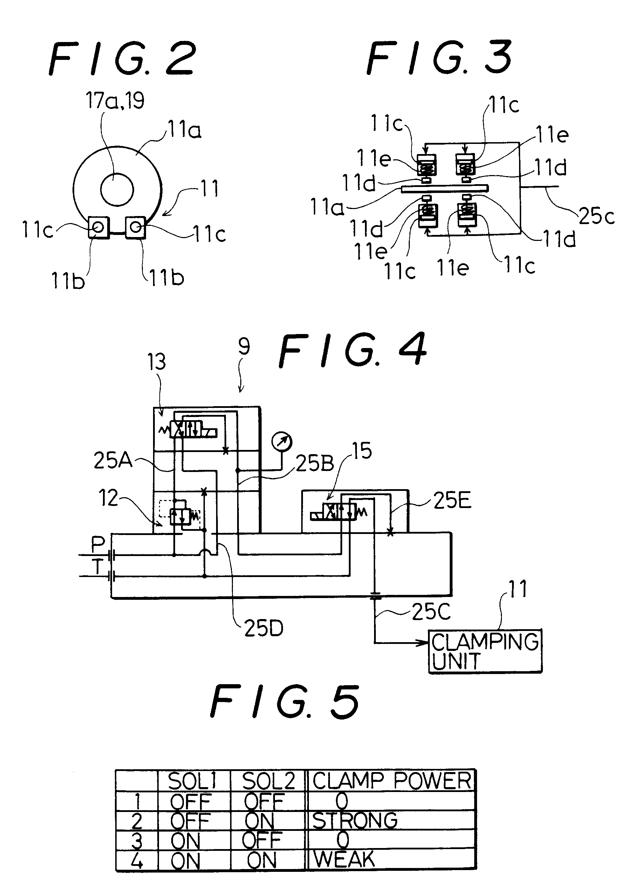

The hydraulic power switching unit 9 has a pressure reducing valve 12, a first solenoid valve 13, a second solenoid valve 15 and the like as shown in Fig.4. The hydraulic power switching unit 9 connects with the hydraulic power source 10 on the side of the pressure reducing valve 12 and with the clamping unit 11 on the side of the second solenoid valve 15. The clamping unit 11 has a brake disc 11a fixed in a workpiece spindle described later as shown in Figs.2 and 3. Two clamping units 11b, 11b are provided on the circumference of the brake disc 11a in the shape of inserting the brake disc 11a between both sides of each unit. The body 11b is U-formed as shown in Fig.1. Two hydraulic cylinders 11c are provided for each body 11b in the shape of inserting the brake disc 11a between them. A brake friction pad 11d is provided for each hydraulic cylinder 11c being free to contact to the brake disc 11a.

A spindle motor controller 16 connects with the shaft control portion 4. A spindle motor 17 connects with the spindle motor controller 16. An output shaft 17a is provided for the spindle motor 17 being directly connected with a workpiece spindle 19. A turning angle detector 20 connected with the spindle motor controller 16 is installed in the output shaft 17a. And, a chuck 22 is installed in the workpiece spindle 19. The chuck 22 can hold the workpiece 23. A lubricating device 21 connects with the clamping unit 11 in the shape of supplying the brake disc 11a with lubricating oil.

With the above-described constitution of the complex machining machine tool 1, in case where usual turning is performed toward a workpiece 23, the spindle motor 17 is rotated at a predetermined rotational number in the state of holding the workpiece 23 by the chuck 22 as shown in Fig.1 and a predetermined machining is performed toward the workpiece 23 by means of turning tool such as a cutting tool. In case where machining is performed with C-axis control and the workpiece spindle 19 is clamped by the clamping unit 1 positioning at a predetermined angle, the main control portion 3 reads out a clamp control program CPR from the program memory 5 and drives and controls the clamping unit 11 on the basis of the clamp control program CPR.

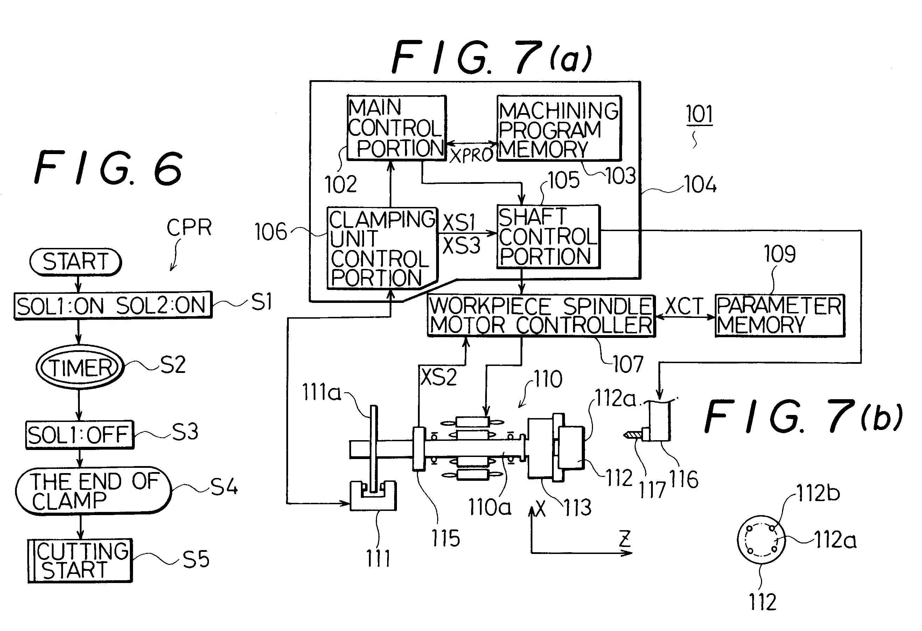

That is, the first solenoid valve 13 and the second solenoid valve 15 of the hydraulic power switching unit 9 are both changed from "off condition" to "on condition" at the step S1 according to the clamp control porgram CPR as shown in Fig.6. Then, the pressure reducing valve 12 reduces the pressure of pressure oil from the hydraulic power source 10 to a predetermined pressure. And, each hydraulic cylinder 11c of the clamping unit 11 is supplied with the reduced pressure oil via a line 25A, the first solenoid valve 13, a line 25B, the second solenoid valve 15 and a line 25C. Each hydraulic cylinder 11c is supplied with pressure oil in which the pressure is reduced by the pressure reducing valve 12. Then, each hydraulic cylinder 11c slowly moves the brake friction pad 11d in the direction of the brake disc 11a to start contact with the brake disc 11a.

The clamping unit control portion 6 keeps the first solenoid valve 13 and the second solenoid valve 15 ON up to the passage of predetermined time at the step S2 of the clamp control program CPR and waits till all the brake friction pads 11d of four hydraulic cylinders 11c of the clamping unit 11 come into contact with the brake disc 11a. Then, four brake friction pads 11d comes into contact with the brake disc 11a slowly. Therefore, although small time difference results from assembly error and the like in the timing of the start of contact, four brake friction pads 11d are contacted with the brake disc 11a in an equal condition after the passage of predetermined time. Moreover, since the brake disc 11a is always supplied with lubricating oil from the lubricating device 21, the coefficient of friction between the brake friction pad 11d and the brake disc 11a is sharply lowered by the action of lubricating oil. And, in case where by unbalanced contacts of the brake friction pads 11d, torque acts so that the brake disc 11a may rotate in either direction, there is considerable reduction in the torque. Therefore, there can be few position shear in case of clamping. And, the output shaft 17a, that is, the workpiece shaft 19 is in the state of being free to move without difficulty by the action of lubricating oil until four brake friction pads 11d come into contact with the brake disc 11a with predetermined pressure. On the assumption that the workpiece spindle 19 shifts to some angles owing to the unbalanced contacts of the brake friction pads 11d, the spindle motor controller 16 immediately drives the spindle motor 17 in the correcting direction toward the shear according to the turning angle detecting signal S1 from the turning angle detector 20. Accordingly, the shear owing to the unbalanced contacts of the brake friction pads 11d is corrected and the workpiece spindle 19 is clamped by the clamping unit 11.

When the brake disc 11a is slowly clamped by four hydraulic cylinders 11c in this way, the clamp control program CPR proceeds to the step S3 and the first solenoid valve 13 is switched from ON to OFF. Then, each hydraulic cylinder 11c of the clamping unit 11 is supplied with the pressure oil from the hydraulic power source 10 with the pressure oil highly pressured via the line 25D, the first solenoid valve 13, the line 25B, the second solenoid valve 15 and the line 25C without via the pressure reducing valve 12. Each hydraulic cylinder 11c transfers from the clamping of the brake disc 11a with low pressure to the clamping with high pressure. The brake disc 11a is certainly held by four brake friction pads 11d (the step S4 of the clamp control program CPR).

When the workpiece spindle 19 is held by the clamping unit 11 in this way, a predetermined machining is performed toward a workpiece 23 held by the chuck 22 by means of a turning tool (the step S5 of the clamp control program CPR). On this occasion, since the workpiece 23 is correctly positioned at a predetermined angular position on C-axis, machining is performed with high accuracy.

When machining finishes, the second solenoid valve 15 of the hydraulic power switching unit 9 is switched from ON to OFF to drain the pressure oil of the clamping unit 11. Then, the brake friction pad 11d of each hydraulic cylinder 11c leaves the brake disc 11a by the action of an built-in retaining spring 11e. The spindle motor 17, that is, the workpiece spindle 19 is in a state of being free to rotate.

The clamp power of the clamping unit 11 according to ON-OFF state of the first solenoid valve (SOL1) 13 and the second solenoid valve (SOL2) 15 of the hydraulic power switching unit 9 is shown in Fig.5.

The above-described embodiments are about a machine tool in which the workpiece spindle 19 is directly connected with the spindle motor 17. However, in the present invention, any machine tool is available as well as a directly-connected type machine tool as described heretofore.

Another embodiments of the present invention will be explained according to Figs.7 through 9 hereinafter.

A complex machining machine tool 101 has a main control portion 102 comprising an NC unit 104 as shown in Fig.7 (a). A machining program memory 103, a shaft control portion 105, a clamping unit control portion 106 and the like connect with the main control portion 102. A workpiece spindle motor controller 107 connects with the shaft control portion 105 and a parameter memory 109 and a workpiece spindle motor 110 connect with the workpiece spindle motor controller 107. A clamping unit 111 connects with the clamping unit control portion 106.

The workpiece spindle motor 110 has an output shaft formed in the shape of being united as a workpiece spindle 110a. A chuck 113 for holding a workpiece 112 to be machined is installed in the right edge portion of the workpiece spindle 110a in the figure. A turning angle detector 115 is provided at the left edge portion of the workpiece spindle 110a in the shape of being connected with the workpiece spindle motor controller 107. A clamp disc 111a comprising the clamping unit 111 is fixed on the workpiece spindle 110a. A tool rest 116 is provided on the right side of the chuck 113 in Fig.7 being movable and drivable in X-axis and Z-axis directions. Turning tools 117 such as a milling cutter and a drill are attachably and detachably installed in the tool rest 116.

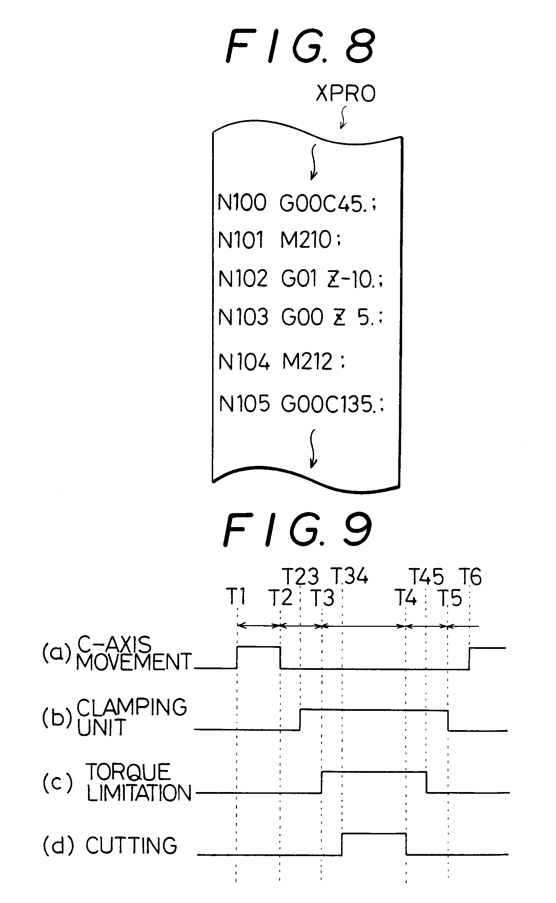

With the above-described constitution of the complex machining machine tool 101, in case where drill holes 112b are formed at an end face 112a of the workpiece 112 installed in the chuck 113 at a predetermined angle pitch by means of the turning tool 117 such as a drill as shown in Fig.7 (b), the main control portion 102 reads out a machining program XPRO corresponding to the workpiece 112 from the machining program memory 103 and machining is performed toward the workpiece 112 on the basis of the command of the machining program XPRO. That is, in the machining program XPRO, it is commanded to position to the C-axis position, ϑ = 45° by rapid feeding at the step of N100 which is sequence number as shown in Fig.8 (G00C45). The shaft control portion 105 performs C-axis control toward the workpiece spindle motor 110 via the workpiece spindle motor controller 107 according to the command to position the workpiece spindle 110a at the position, ( ϑ = 45°) at which the drill hole 112b is formed at first. This operation is executed between time T1 and T2 in a timing chart of C-axis movement as shown in Fig.9 (a).

When C-axis is positioned at the position, ϑ = 45° at the time T2 in this way, the machining program outputs a control code M210 at the sequence number N101 and commands the clamping unit control portion 106 to clamp the workpiece spindle 110a. Then, the clamping unit control portion 106 drives the clamping unit 111 to clamp the workpiece spindle 110a positioned at the position, ϑ = 45° by clamping the clamp disc 111a (time T23 in Fig.9(b) ). On this occasion, the clamp power of the clamping unit 111 is controlled according to the clamp control program CPR as shown in Fig.6 as described before to clamp the workpiece spindle 110a. When the workpiece spindle 110a is clamped at the C-axis position, ϑ = 45° by the clamping unit 111 in this way, a clamp finishing signal XS1 is outputted to the shaft control portion 105. Receiving this, the shaft control portion 105 commands the workpiece spindle motor controller 107 to limit the torque of the workpiece spindle motor 110. The workpiece spindle motor controller 107 receives this command, reads out a clamp current value XCT from the parameter memory 109 and limits the upper bound of driving current of the workpiece spindle motor 110 on the basis of the clamp current value XCT (Fig.9 (c) time T3). The clamp current value XCT is about 5 per cent of the current value corresponding to rating torque. Therefore, the torque of the workpiece spindle motor 110 is considerably limited in comparison with one in usual condition.

When the workpiece spindle motor 110 is positioned so that the workpiece spindle 110a may be ϑ = 45°, the workpiece spindle 110a oscillates bit by bit with ϑ = 45° as a center in the shape of being corrected so that ϑ = 45° by servo positioning error. And, the workpiece spindle 110a is held in the shape of shifting in ± direction of C-axis to some degree (a few pulses) in comparison with ϑ = 45° according to the clamping timing of the clamping unit 111. However, even in this clamp condition, a position servo loop comprised of the turning angle detector 15, the workpiece spindle motor controller 107 and the workpiece spindle motor 110 function as usual. And, the C-axis position of the workpiece spindle 110a is always detected from the turning angle detector 115 and outputted to the workpiece spindle motor controller 107 as a position signal XS2. Driving current is flowed to the workpiece spindle motor 110 by the workpiece spindle motor controller 107 so as to correct the error between the position signal XS2 and ϑ = 45° which is command value. As long as the error doesn't shrink between the signal XS2 and the command value, the workpiece spindle motor controller 107 controls so as to increase driving current. However, in case of clamping of the workpiece spindle 110a by the clamping unit 111, the upper bound of driving current is considerably limited by the clamp current value XCT as described before. Therefore, even if the workpiece spindle motor controller 107 increases driving current to the workpiece spindle motor 110, there is no possibility of increasing it more than the clamp current value XCT. In result, excessive torque doesn't act on the workpiece spindle motor 110 and the workpiece spindle motor 110 doesn't overheat.

The shaft control portion 105 drives the tool rest 116 according to sequence numbers N102, N103 of the machining program as shown in Fig.8 in such a state the torque of the workpiece spindle motor 110 is limited between time T3 and T45 in Fig.9 (c). And, machining is performed toward the workpiece 112 in order to form the drill hole 112b at the position, ϑ = 45° (between time T34 and T4 in Fig.9 (d) ).

When the machining of the drill hole 112b finishes by means of the turning tool 117 in this way, the shaft control portion 105 commands the workpiece spindle motor controller 107 to release the limitation of torque. The workpiece spindle motor 110 releases the setting of the clamp current value XCT used theretofore at time T45 and the workpiece spindle motor 110 is recovered in an usual condition. The machining program XPRO proceeds to sequence number N104 as shown in Fig.8. The clamping unit control portion 106 unclamps the clamping unit 111 according to the control code of M212 and releases the clamping condition of the workpiece spindle 110a (time T5 in Fig.9 (b) ). When an unclamping signal XS3 is outputted to the shaft control portion 105 for indicating the release of the clamping of the workpiece spindle 110a, the shaft control portion 105 proceeds to sequence number N105 of the machining program XPRO and proceeds to rapid feeding and positioning movements in order to position the workpiece spindle 110a, that is, the workpiece 112 at the C-axis position ϑ = 135° to be machined toward the drill hole 112b (time T6 in Fig.9 (a) ). On this occasion, since the workpiece spindle motor 110 is driven in such a state that the limitation by the clamp current value XCT is released, rapid feeding and positioning movements are smoothly performed. Even on the occasion of the clamping of the workpiece spindle 110a by the clamping unit 111, the servo loop of the workpiece spindle motor 110 continues to work via the turning angle detector 115 and the workpiece spindle motor controller 107. Accordingly, the workpiece spindle motor controller 107 always recognizes the present position of C-axis of the workpiece spindle 110a. Therefore, it is possible to proceed to next C-axis positioning movement immediately without origin recovering movement when the clamping unit 111 is unclamped.

In case where usual turning is performed by using the complex machining machine tool 101, the workpiece spindle motor 110 is rotated at a predetermined rotation number and the workpiece 112 held by the chuck 113 is machined by tools for turning on the tool rest 116.

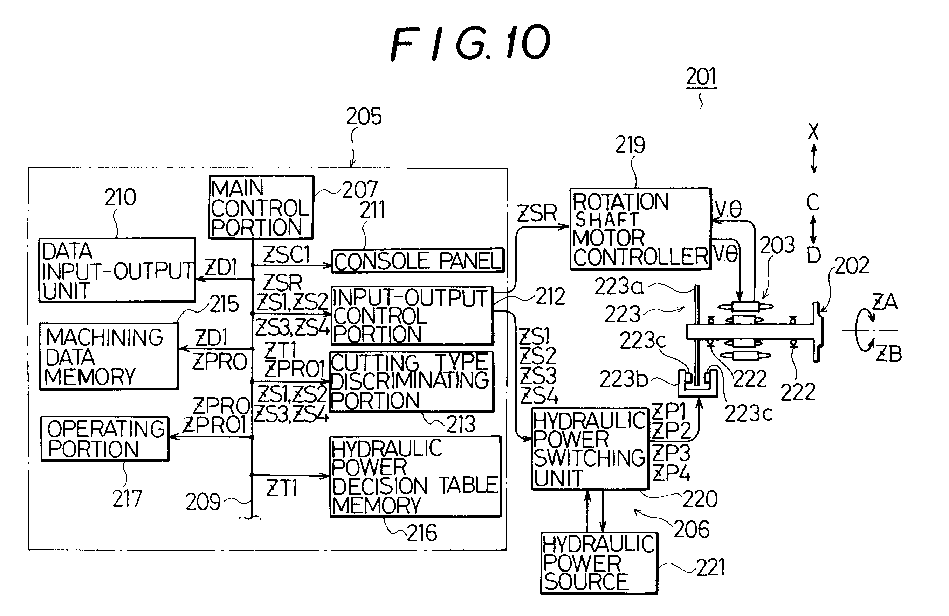

Moreover, an example of rotation axis control unit for machine tool will be explained according to Figs. 10 through 12 hereinafter.

A machine tool 201 capable of performing C-axis control, such as a lathe has a rotation shaft 202, a driving motor 203, an NC unit 205, a rotation shaft control unit 206 and the like as shown in Fig.10. The NC unit 205 has a main control portion 207. A data input-output unit 210, a console panel 211, an input-output control portion 212, a machining data memory 215, a cutting type discriminating portion 213 comprising the rotation shaft control unit 206, a hydraulic power decision table memory 216, an operating portion 217 and the like connect with the main control portion 207 via a bus line 209. A rotation shaft motor controller 219 and a hydraulic power switching unit 220 comprising the rotation shaft control unit 206 connect with the input-output control portion 212. A hydraulic power switching table ZT1 as shown in Fig.12 is stored in the hydraulic power decision table memory 216. The kinds of hydraulic power switching signals ZS (for instance, ZS1, ZS2, ZS3, ZS4) which is outputted to the hydraulic power switching unit 220 as shown in Fig.10 according to cutting types CV (for instance, CV1, CV2, CV3) are written in the hydraulic power switching table ZT1. A hydraulic power source 221 compounding from a hydraulic pump, a drain tank and the like connects with the hydraulic power switching unit 220.

The rotation shaft 202, such as a spindle is provided via bearings 222, 222 being rotatable in the directions as shown by the arrows ZA and ZB as shown on the right side in Fig.10. A workpiece can be installed in the rotation shaft 202 via a chuck (not shown). At the center portion of the rotation shaft 202 in the figure, the driving motor 203 is provided in the shape of being built in the rotation shaft 202. The rotation shaft motor controller 219 described before connects with the driving motor 203. And, a disc 223a comprising a public disc brake 223 is installed in the left edge portion of the rotation shaft 202 in the figure. An engaging unit 223b comprising the disc brake 223 is provided below the rotation shaft 202 in the figure so as to be able to hold the disc 223a with predetermined power by means of pads 223c, 223c comprising the engaging unit 223b. The hydraulic power switching unit 220 described before connects with the engaging unit 223b.

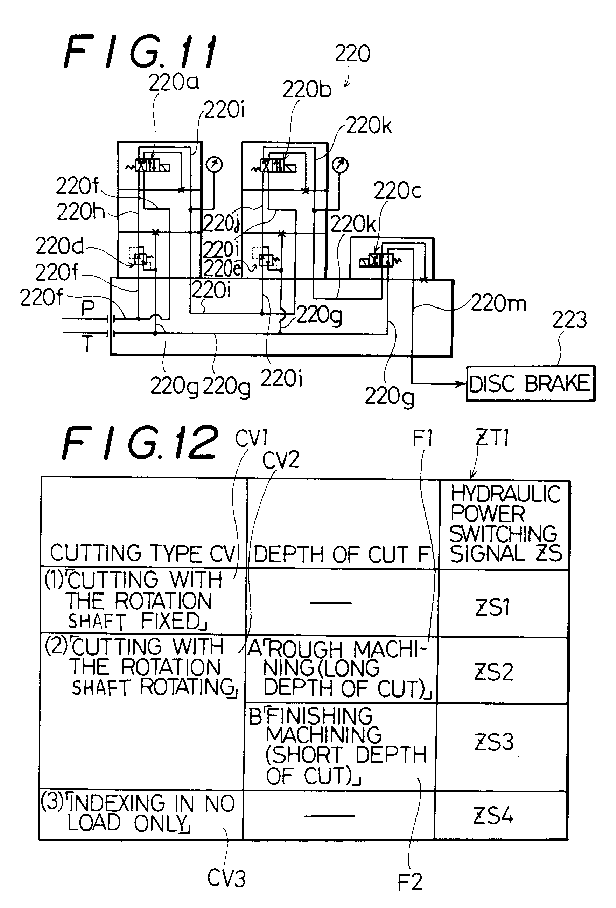

The hydraulic power switching unit 220 has a first directional control valve 220a, a second directional control valve 220b, a third directional control valve 220c, a first pressure reducing valve 220d, a second pressure reducing valve 220e, and the like as shown in Fig.11. The first pressure reducing valve 220d connects with the first directional control valve 220a via a line 220h. A hydraulic pump (not shown) comprising the hydraulic power source 221 as shown in Fig.10 connects with the first pressure reducing valve 220d via a line 220f. The hydraulic pump directly connects with the first directional control valve 220a as shown in Fig.11 via the line 220f. And, the second pressure reducing valve 220e connects with the first directional control valve 220a via a line 220i and the second directional control valve 220b connects with the second pressure reducing valve 220e via a line 220j.

The second directional control valve 220b directly connects with the first directional control valve 220a via the line 220i. And, the third directional control valve 220c connects with the second directional control valve 220b via a line 220k. A drain tank (not shown) comprising the hydraulic power source 221 as shown in Fig.10 connects with the third directional control valve 220c via a line 220g. And, the engaging unit 223b of the disc brake 223 as shown in Fig.10 connects with the third directional control valve 220c as shown in Fig.11 via a line 220m.

With the above-described constitution of the machine tool 201, in order to perform milling with C-axis control toward a workpiece by using the machine tool 201, a workpiece (not shown) to be machined is installed in the rotation shaft 202 as shown in Fig.10 through a chuck and the like. In this state, a worker inputs machining data ZD1 (for instance, the X-axis coordinate values X1, X2 of the machining starting point and the machining end point of a workpiece in the directions as shown by the arrows C and D (X-axis direction) in Fig.10, the angular velocity V of the rotation shaft 202 and the like) via the data input-output unit 210 of the NC unit 205. Then, the data input-output unit 210 outputs those machining data ZD1 to the machining data memory 215. Receiving this, the machining data memory 215 stores the machining data ZD1 as a part of a machining program ZPRO.

When the machining program ZPRO is composed and stored in the machining data memory 215 in this way, a worker inputs a machining starting command ZSC1 via the console panel 211 as shown in Fig.10. Receiving this, the main control portion 207 commands the operating portion 217 to compose an executable program ZPRO1 including the generation of tool path. Then, the operating portion 217 reads out the machining program ZPRO stored in the machining data memory 215 and composes the executable program ZPRO1 on the basis of EIA-ISO code and the like according to the program ZPRO. And, milling and the like are performed with C-axis control toward a workpiece according to the composed executable program ZPRO1.

That is, at first, the main control portion 207 of the NC unit 205 as shown in Fig.10 outputs any indexing command ZSR to the rotation shaft motor controller 219 via the input-output coutrol portion 212 as shown in Fig.10 so that the rotation shaft 202 may be positioned at the position with predetermined angle to C-axis origin (C-axis origin is not shown) in order to execute the steps of the executable program ZPRO1 composed by the operating portion 217 in order. Then, the rotation shaft motor controller 219 rotates the driving motor 203 (that is, the rotation shaft 202) at a predetermined angular velocity V in the directions as shown by the arrows ZA and ZB with rotation angle quantity ϑ to position the rotation shaft 202 at the position with a predetermined angle to C-axis origin.

In case where the main control portion 207 as shown in Fig.10 outputs the indexing command ZSR to the rotation shaft motor controller 219, the cutting type discriminating portion 213 reads out the executable program ZPRO1 from the operating portion 217 and determines that the cutting type CV to be performed from now on is CV3 as shown in Fig.12, that is, (3) "indexing in no load only" from the contol code of the step indicated by the program ZPRO1. And, the cutting type discriminating portion 213 as shown in Fig.10 reads out the hydrulic power decision table ZT1 from the the hydraulic power decision table memory 216 and outputs the hydraulic power switching signal ZS4 corresponding to (3) "indexing in no load only", that is, in case where the cutting type CV is CV3, to the hydraulic power switching unit 220 as shown in Fig.10 by retrieving the read hydraulic power decision table ZT1 as shown in Fig.12.

On this occasion, the hydraulic power switching signals ZS corresponding to the cutting types CV are indicated in the the hydraulic power decision table ZT1 as shown in Fig.12. In case where the cutting type CV is CV1, that is, (1) "cutting with the rotation shaft fixed", ZS1 is indicated as the hydraulic power switching signal ZS according to the cutting type CV. In case where the cutting type CV is CV2, that is, (2) "cutting with the rotation shaft rotating" and A."rough machining (long depth of cut)" F1, ZS2 is indicated as the hydraulic power switching signal ZS according to the cutting type CV. In case where the cutting type CV is CV2, that is, (2) "cutting with the rotation shaft rotating" and B."finishing machining (short depth of cut)" F2, ZS3 is indicated as the hydraulic power switching signal ZS according to the cutting type CV. And, in case where the cutting type CV is CV3, that is, (3) "indexing in no load only", ZS4 is indicated as the hydraulic power switching signal ZS according to the cutting type CV. Accordingly, the cutting type discriminating portion 213 can obtain the hydraulic power switching signal ZS according to the determined cutting type CV by retrieving the hydraulic power decision table ZT1.

Then, the hydraulic power switching unit 220 as shown in Fig.10 stops the drive of all of the first, second and third directional control valves 220a, 220b, 220c as shown in Fig.11 on the basis of the hydraulic power switching signal ZS4. Then, the connection between the lines 220f and 220m is released via those directional control valves 220a, 220b, 220c and the engaging unit 223b of the disc brake 223 as shown in Fig.10 isn't supplied with pressure oil from the line 220f (Accordingly, the pressure value ZP of pressure oil supplying the engaging unit 223b is ZP4 (= 0) ). Therefore, the pads 223c, 223c of the engaging unit 223b don't hold the disc 223a. In result, the indexing of the rotation shaft 202 on the basis of the executable program ZPRO1 is performed with high speed and high accuracy since the rotation of the rotation shaft 202 in the directions as shown by the arrows ZA and ZB isn't limited by the disc brake 223 and the rotation shaft 202 is directly rotated and driven by the driving motor 203 without a speed reducer.

In case where milling is performed toward a workpiece with C-axis control with the rotation shaft 202 fixed after indexing operation in order to form a key way and the like on a workpiece, the main control portion 207 as shown in Fig.10 commands a tool rest control portion (not shown) to cut a workpiece with the rotation shaft 202 fixed on the basis of the executable program XPRO1. When the command is outputted to a tool rest control portion and the like, the cutting type discriminating portion 213 determines that the cutting type CV to be performed from now on is CV1 as shown in Fig.12, that is, (1)"cutting with the rotation shaft 202 fixed" on the basis of the executable program ZPRO1 read out from the operating portion 217. Furthermore, the cutting type discriminating portion 213 as shown in Fig.10 obtains the hydraulic power switching signal ZS corresponding to the determined cutting type CV1, that is, ZS1 by retrieving the hydraulic power decision table ZT1 read out from the hydraulic power decision table memory 216 as shown in Fig.12 and outputs the obtained hydraulic power switching signal ZS1 to the hydraulic power switching unit 220 as shown in Fig.10.

Then, the hydraulic power switching unit 220 drives the third directional control valve 220c among the first, second and third directional control valves 220a, 220b, 220c as shown in Fig.11 on the basis of the hydraulic power switching signal ZS1. Then, the third directional control valve 220c is supplied with pressure oil in which the pressure value ZP is the set value ZP1 from a hydraulic pump via the line 220f, the first directional control valve 220a, the line 220i, the second directional control valve 220b and the line 220k. On this occasion, the pressure value ZP doesn't reduce and the set value ZP1 is kept since the pressure oil supplied to the third directional control valve 220c doesn't pass the first and second pressure reducing valves 220d and 220e. Then, the engaging unit 223b of the disc brake 223 as shown in Fig.10 holds the disc 223a with strong power corresponding to the pressure value ZP1 of the supplied pressure oil via the pads 223c, 223c (On this occasion, the clamp power of the engaging unit 223b is controlled by the clamp control program CPR as shown in Fig.6 to clamp the rotation shaft 202 as explained before.) to improve the self-holding function of the rotation shaft 202.

Even if cutting power considerably acts on the rotation shaft 202 by performing milling (heavy cutting in particular) toward a workpiece by means of a tool rest (not shown) in such a manner that the tool rest is moved and driven via a tool rest control portion and the like in the right and left directions in Fig.1 and in the directions as shown by the arrows C and D with the rotation shaft 202 fixed, there is no possibility of rotating the rotation shaft 202 in the directions as shown by the arrows ZA and ZB by the cutting power. For this reason, the workpiece is cut without chatter and a key way and the like are formed on the workpiece with high accuracy.

In case where a workpiece is cut rotating the rotation shaft 202 in the directions as shown by the arrows ZA and ZB by C-axis control in order to form a cam groove and the like on a workpiece, the main control portion 207 as shown in Fig.10 commands the rotation shaft motor controller 219, a tool rest control portion and the like to cut a workpiece rotating the rotation shaft 202 by C-axis control according to the executable program ZPRO1. When the command is outputted to the tool rest control portion and the like, the cutting type discriminating portion 213 determines on the basis of the step relating the cutting movement to be performed from now on which is written in the executable program ZPRO1 that the cutting type CV is CV2 as shown in Fig.12, that is, (2)"cutting with the rotation shaft 202 rotating" and A."rough machining (long depth of cut)" F1. And, the cutting type discriminating portion 213 obtains the hydraulic power switching signal ZS2 corresponding to the determined cutting type CV2 (A. "rough machining (long depth of cut)" ) by retrieving the hydraulic power decision table ZT1 as shown in Fig.12 and outputs the obtained switching signal ZS2 to the hydraulic power switching unit 220 as shown in Fig.10.

Then, the hydraulic power switching unit 220 as shown in Fig.10 drives the first and third directional control valves 220a, 220c among the first, second and third directional control valves 220a, 220b, 220c as shown in Fig.11 on the basis of the hydraulic power switching signal ZS2. Then, the first directional control valve 220a connects between the lines 220h and 220i and the third directional control valve 220c connects between the lines 220k and 220m. For this reason, the pressure oil expelled from a hydraulic pump, in which the pressure value ZP is the set value ZP1 is inflowing into the first pressure reducing valve 220d via the line 220f to reduce the presuure value up to ZP2 (<ZP1). Furthermore, in this state, the pressure oil in which the pressure value ZP is ZP2 is inflowing from the first pressure reducing valve 220d into the third directional control valve 220c via the line 220h, the first directional control valve 220a, the line 220i, the second directional control valve 220b and the line 220k without via the pressure reducing valve 220e. And, the engaging unit 223b of the disc brake 223 as shown in Fig.10 is supplied with the pressure oil in which the pressure value ZP is ZP2 via the third directional control valve 220c and the line 220m. Then, the engaging unit 223b holds the disc 223a according to the pressure value ZP2 of the supplied pressure oil with more weak power in comparison with the case of cutting with the rotation shaft 202 fixed as described before. For this reason, the rotation of the rotation shaft 202 in the directions as shown by the arrows ZA and ZB is limited by the disc brake 223 to improve self-holding function.

In result, there is no possibility of rotating the rotation shaft 202 in the directions as shown by the arrows ZA and ZB inadvertently by the considerable cutting power acting on the rotation shaft 202 on the assumption that rough machining is performed toward a workpiece by means of the tool installed in a tool rest rotating the rotation shaft 202 in the direction as shown by the arrows ZA and ZB by C-axis control in such a state the the depth of cut is long.

In case where finishing machining is further performed toward a workpiece rotating the rotation shaft 202 after rough machining is performed toward a workpiece rotating the rotation shaft 202 by C-axis control, the main control portion 207 as shown in Fig.10 commands the rotation shaft motor controller 219 and the like to perform machining such as milling rotating the rotation shaft 202 according to the executable program ZPRO1. Then, the cutting type discriminating portion 213 determines on the basis of the executable program ZPRO1 read out from the operating portion 217 that the cutting type CV to be performed from now on is CV2 as shown in Fig.12, that is, (2) "cutting with the rotation shaft 202 rotating" and B "finishing machining (short depth of cut) F2 and obtains the hydraulic power switching signal ZS corresponding to the cutting type CV2 (B "finishing machining (short depth of cut) ), that is, ZS3 by retrieving the hydraulic power decision table ZT1 as shown in Fig.12 to output to the hydraulic power switching unit 220 as shown in Fig.10.

Then, the hydraulic switching unit 220 drives the second and third directional control valves 220b, 220c among the first, second and third directional control valves 220a, 220b, 220c as shown in Fig.11 on the basis of the hydraulic power switching signal ZS3. Then, the second directional control valve 220b connects between the lines 220j and 220k and the third directional control valve 220c connects between the lines 220k and 220m. For this reason, the pressure oil expelled from a hydraulic pump, in which the pressure value ZP is the set value ZP1 is inflowing into the second pressure reducing valve 220e via the line 220f, the first directional control valve 220a and the line 220i without via the pressure reducing valve 220d to reduce the pressure value ZP up to ZP3 (< ZP2). Moreover, the pressure oil in which the pressure value ZP becomes ZP3 is inflowing from the second pressure reducing valve 220e into the third directional control valve 220c via the line 220j, the second directional control valve 220b and the line 220k. And, the engaging unit 223b of the disc brake 223 as shown in Fig.10 is supplied with the pressure oil in which the pressure value ZP is ZP3 via the third directional control valve 220c and the line 220m.

Then, the engaging unit 223b holds the disc 223a with more weak power in comparison with the case of rough machining as described before according to the pressure value ZP3 of the supplied pressure oil to improve the self-holding function of the rotation shaft 202. In result, there is no possibility of rotating the rotation shaft 202 in the directions as shown by the arrows ZA and ZB by the cutting power acting on the rotation shaft 202 on the assumption that finishing machining is performed toward a workpiece by means of a tool installed in a tool rest rotating the rotation shaft 202 so that the depth of cut may be short. Therefore, a cam groove and the like are formed on a workpiece with high accuracy. On this occasion, since the depth of cut F is short and the cutting power acting on the rotation shaft 202 is more weak in comparison with in the case of the rough machining as described before, the power to hold the disc 223a of the engaging unit 223b is weakened.

With such a constitution that brake means such as disc brake 223 is provided for the rotation shaft 202 and brake driving control means such as the hydraulic power switching unit 220 is provided in order to drive and control said brake means, brake driving control means drives and controls brake means according to machining to be performed from now on to be able to change the power to hold the rotation shaft 202 by brake means.

In case where milling and the like are performed toward a workpiece installed in the rotation shaft 202 rotating the rotation shaft 202 by C-axis control, therefore, a workpiece can be machined with high accuracy without chatter in such a manner that brake means is driven and controlled according to the machining contents to change the self-holding function of the rotation shaft 202 by stages. And, in case of the indexing of the rotation shaft 202, indexing can be performed with high speed and high accuracy by rotating and driving the driving motor 203 directly connected with the rotation shaft 202 with high speed without holding the rotation shaft 202 by brake means.

The present invention is explained according to embodiments hereinbefore. But the embodiments described in the present specification are not restricted but exemplified ones. And, the range of the invention is supported by the attached claims and not bound by the description of the embodiments. Accordingly, all of deformations and changes belonging to the claims is in the range of the present invention.

## Claims

1. A workpiece spindle control unit, comprising:
a workpiece spindle (19);
a workpiece spindle motor (17) having a normal rated operating torque directly connected with said workpiece spindle (19) for driving said workpiece spindle (19);
a turning angle detecting means (20) for detecting the turning angle of said workpiece spindle (19);
a servo control means (16) for controlling the turning angle of said workpiece spindle (19) by controlling said workpiece spindle motor (17) in response to a signal from said turning angle detecting means: and
a clamping means (11) for clamping said workpiece spindle (19) in a stopping condition or to frictionally turn said workpiece spindle (19) with angular control by engaging with said workpiece spindle (19);
characterised in that the said control unit comprises
command means (2) for commanding said servo control means (16) to reduce the torque of said workpiece spindle motor (17) below the said normal rated operating torque while said clamping means clampingly engages said workpiece spindle (19) to control the rotation of said workpiece spindle (19).

2. A workpiece spindle control unit as set forth in claim 1, wherein said clamping means comprises brake means for braking the rotation of said workpiece spindle; a power adjusting means for adjusting in discrete steps the amount of power used by said clamping means for clamping engagement with the workpiece spindle being provided, said clamping means having a brake disc mounted on the workpiece spindle for rotation therewith and said brake means being disposed so as to be capable of clamping said brake disc on both sides thereof.

3. A workpiece spindle control unit as set forth in claim 2, wherein said brake means comprises two hydraulic cylinders, each cylinder being fitted with a respective return spring and each being located on an opposite side of said brake disc, each cylinder serving to operate a respective brake pad for braking the said brake disc.

4. A workpiece spindle control unit as set forth in claim 2, wherein said clamping means is actuated by the pressure of an actuation fluid supplied thereto, the said power adjusting means comprising pressure adjusting means for adjusting, in discrete steps, the pressure of said actuation fluid supplied to said clamping means, said clamping means being fluidly connected to said pressure adjusting means for the supply of said actuation fluid therefrom.

5. A workpiece spindle control unit as set forth in claim 4, wherein said pressure adjusting means comprises: a pressure reducing valve means, for reducing the pressure of acutation fluid received from an actuation fluid source; a first valve means for selecting, for supply to the said clamping means, either reduced pressure actuation fluid from said pressure reducing valve means or actuation fluid from the actuation fluid source; and a second valve means for either feeding actuation fluid selected by said first valve means from said first valve means to said clamping means or feeding no actuation fluid to said clamping means.

6. A workpiece spindle control unit as set forth in any preceding claim, and further comprising supply means for supplying a friction reducing fluid to said clamping means.

7. A method for controlling a workpiece spindle (19), in combination with a workpiece spindle motor (17), having a normal rated operating torque, directly connected with said workpiece spindle (19) for driving said workpiece spindle (19); a turning angle detecting means (20), for detecting the turning angle of said workpiece spindle (19); a servo control means (16), for controlling the turning angle of said workpiece spindle by controlling said workpiece spindle motor (17) in response to a signal from said turning angle detecting means (20); and a clamping means (11) for clamping said workpiece spindle (19) in a stopping condition or to frictionally turn said workpiece spindle (19) with angular control by engaging with said workpiece spindle (19);
comprising the steps of:
(i) clamping said workpiece spindle (19) and said workpiece spindle motor (17) with said clamping means (11) by actuating said clamping means (11);
(ii) controlling the turning angle of said workpiece spindle (19) with said servo control means (16), while said workpiece spindle (19) and workpiece spindle motor (17) are being clampingly engaged by said clamping means (11) in response to a signal from said turning angle detecting means (20), to maintain said workpiece spindle (19) at a predetermined angular position; characterised in
(iii) reducing the torque of said workpiece spindle motor (17) below the normal rated operating torque of said workpiece spindle motor (17), whereby overheating of said workpiece spindle motor (17) is prevented.

8. A method for controlling a workpiece spindle according to claim 7, and further comprising the steps of:
(i) performing a machining operation on said workpiece held with said workpiece spindle when the torque of said workpiece spindle motor is reduced below the normal rated operating torque of said workpiece spindle motor; and
(ii) removing the limit to the torque of said workpiece spindle motor and disengaging the clamping engagement of said workpiece spindle after the machining operation on said workpiece is finished.

## Patentansprüche

1. Werkstückspindel-Steuereinheit, mit
- einer Werkstückspindel (19),
- einem Werkstückspindelmotor (17) von normalem Nennbetriebsdrehmoment, der zum Antreiben der genannten Werkstückspindel (19) mit der genannten Werkstückspindel (19) direkt verbunden ist,
- einer Drehwinkeldetektoreinrichtung (20) zum Feststellen des Drehwinkels der genannten Werkstückspindel (19),
- einer Servosteuereinrichtung (16) zum Steuern des Drehwinkels der genannten Werkstückspindel (19) durch Steuern des genannten Werkstückspindelmotors (17) in Abhängigkeit von einem Signal von der genannten Drehwinkeldetektoreinrichtung, und
- einer Klemmvorrichtung (11) zum Klemmen der genannten Werkstückspindel (19) in einem Haltzustand oder zum Drehen der genannten Werkstückspindel (19) unter Reibschluß mit Winkelkontrolle durch Anlegen an die genannte Werkstückspindel (19),
dadurch gekennzeichnet, daß die genannte Steuereinrichtung umfaßt:
- eine Befehlseinrichtung (2) zum Anweisen der genannten Servosteuereinrichtung (16), zur Steuerung der Drehung der genannten Werkstückspindel (19) das Drehmoment des genannten Werkstückspindelmotors (17) unter das genannte normale Nennbetriebsdrehmoment herabzusetzen, während die genannte Klemmvorrichtung an der genannten Werkstückspindel (19) mit Klemmung anliegt.

2. Werkstückspindel-Steuereinheit nach Anspruch 1, bei der die genannte Klemmvorrichtung umfaßt: eine Bremseinrichtung zum Bremsen der Drehung der genannten Werkstückspindel, eine Krafteinstelleinrichtung zum Einstellen in diskreten Stufen des von der genannten Klemmvorrichtung zur klemmenden Anlage an der vorhandenen Werkstückspindel benutzten Kraftbetrages, wobei die genannte Klemmvorrichtung eine Bremsscheibe aufweist, die auf der Werkstückspindel mit dieser drehfest angeordnet ist, und die genannte Bremseinrichtung so angeordnet ist, daß sie die genannte Bremsscheibe auf ihren beiden Seiten zu klemmen vermag.

3. Werkstückspindel-Steuereinheit nach Anspruch 2, bei der die genannte Bremseinrichtung zwei hydraulische Zylinder aufweist, wobei jeder Zylinder mit einer zugehörigen Rückstellfeder versehen ist und jeder auf einer entgegengesetzten Seite der genannten Bremsscheibe angeordnet ist, dabei jeder Zylinder dazu dient, einen zugehörigen Bremsklotz zum Bremsen der genannten Bremsscheibe zu betätigen.

4. Werkstückspindel-Steuereinheit nach Anspruch 2, bei der die genannte Klemmvorrichtung durch den Druck eines ihr zugeleiteten Betätigungsfluides betätigt wird, die genannte Krafteinstelleinrichtung eine Druckeinstelleinrichtung zum Einstellen in diskreten Stufen des Druckes des der genannten Klemmvorrichtung zugeleiteten genannten Betätigungsfluides aufweist, wobei die genannte Klemmvorrichtung mit der genannten Druckeinstelleinrichtung zum Zweck der Zuleitung des genannten Betätigungsfluides von ihr in Fluidverbindung steht.

5. Werkstückspindel-Steuereinheit nach Anspruch 4, bei der die genannte Druckeinstelleinrichtung umfaßt: ein Druckreduzierventil zum Vermindern des Druckes des von einer Betätigungsfluidquelle empfangenen Betätigungsfluides, ein erstes Ventil zum Wählen für die Zuleitung zur genannten Klemmvorrichtung entweder eines Betätigungsfluides von reduziertem Druck vom genannten Druckreduzierventil oder eines Betätigungsfluides von der Betätigungsfluidquelle, und ein zweites Ventil für die Versorgung der genannten Klemmvorrichtung mit Betätigungsfluid, nach Wahl durch das genannte erste Ventil, vom genannten ersten Ventil oder für die Nichtversorgung der genannten Klemmvorrichtung mit Betätigungsfluid.

6. Werkstückspindel-Steuereinheit nach einem der vorhergehenden Ansprüche, ferner mit einer Versorgungseinrichtung zum Zuleiten eines reibungsvermindernden Fluids zur genannten Klemmvorrichtung.

7. Verfahren zum Steuern einer Werkstückspindel (19), in Verbindung mit einem Werkstückspindelmotor (71) von normalem Nennbetriebsdrehmoment, der zum Antreiben der genannten Werkstückspindel (19) mit der genannten Werkstückspindel (19) direkt verbunden ist, einer Drehwinkeldetektoreinrichtung (20) zum Feststellen des Drehwinkels der genannten Werkstückspindel (19), einer Servosteuereinrichtung (16) zum Steuern des Drehwinkels der genannten Werkstückspindel durch Steuern des genannten Werkstückspindelmotors (17) in Abhängigkeit von einem Signal von der genannten Drehwinkeldetektoreinrichtung (20), und einer Klemmvorrichtung (11) zum Klemmen der genannten Werkstückspindel (19) in einem Haltzustand oder zum Drehen der genannten Werkstückspindel (19) mit Reibschluß unter Winkelkontrolle durch Anlegen an die genannte Werkstückspindel (19),
mit den Arbeitsschritten:
- Klemmen der genannten Werkstückspindel (19) und des genannten Werkstückspindelmotors (17) mittels der genannten Klemmvorrichtung (11) durch Betätigen der genannten Klemmvorrichtung (11),
- Steuern des Drehwinkels der genannten Werkstückspindel (19) mittels der genannten Servosteuereinrichtung (16), während die genannte Klemmvorrichtung (11) in Abhängigkeit von einem Signal von der genannten Drehwinkeldetektoreinrichtung (20) an der genannten Werkstückspindel (19) und dem Werkstückspindelmotor (17) klemmend anliegt, derart, daß die genannte Werkstückspindel (19) in einer vorbestimmten Winkelstellung gehalten wird,
gekennzeichnet durch
- die Reduzierung des Drehmomentes des genannten Werkstückspindelmotors (17) unter das normale Nennbetriebsdrehmoment des genannten Werkstückspindelmotors (17), wodurch ein Heißlaufen des genannten Werkstückspindelmotors (17) verhindert wird.

8. Verfahren zum Steuern einer Werkstückspindel nach Anspruch 7, ferner mit den Arbeitsschritten:
- Ausführen einer Bearbeitung am genannten, an der genannten Werkstückspindel aufgenommenen Werkstück, wenn das Drehmoment des genannten Werkstückspindelmotors unter das normale Nennbetriebsdrehmoment des genannten Werkstückspindelmotors herabgesetzt ist, und
- Aufheben der Drehmomentbegrenzung des genannten Werkstückspindelmotors und Lösen der klemmenden Anlage an der genannten Werkstückspindel nach Beendigung der Bearbeitung des genannten Werkstücks.

## Revendications

1. Unité de commande de broche porte-pièce, comprenant :
une broche porte-pièce (19);
un moteur (17) de broche porte-pièce possédant un couple de travail de régime normal, directement relié à ladite broche porte-pièce (19) pour entraîner ladite broche porte-pièce (19);
un moyen (20) de détection d'angle de rotation pour détecter l'angle de rotation de ladite broche porte-pièce (19);
un moyen de servocommande (16) pour régler l'angle de rotation de ladite broche porte-pièce (19) en commandant ledit moteur (17) de broche porte-pièce en réponse à un signal provenant dudit moyen de détection d'angle de rotation; et
un moyen de serrage (11) pour serrer ladite broche porte-pièce (19) dans une condition d'arrêt ou pour faire tourner par friction ladite broche porte-pièce (19) avec un réglage angulaire en venant se mettre en contact avec ladite broche porte-pièce (19);
caractérisé en ce que ladite unité de commande comprend :
un moyen de commande (2) pour commander ledit moyen de servocommande (16) pour réduire le couple dudit moteur (17) de broche porte-pièce en dessous dudit couple de travail de régime normal, tandis que ledit moyen de serrage vient se mettre en contact par serrage avec ladite broche porte-pièce (19) pour commander la rotation de ladite broche porte-pièce (19).

2. Unité de commande de broche porte-pièce selon la revendication 1, dans laquelle ledit moyen de serrage comprend un moyen de frein pour freiner la rotation de ladite broche porte-pièce; un moyen de réglage de puissance étant prévu pour régler, par étapes discrètes, la quantité d'énergie utilisée par ledit moyen de serrage pour la mise en contact par serrage avec la broche porte-pièce, ledit moyen de serrage possédant un frein à disque monté sur la broche porte-pièce à des fins de rotation avec cette dernière et ledit moyen de frein étant disposé pour être capable de serrer ledit frein à disque sur ses deux côtés.

3. Unité de commande broche porte-pièce selon la revendication 2, dans laquelle ledit moyen de frein comprend deux cylindres hydrauliques, chaque cylindre étant équipé d'un ressort de rappel respectif et chacun étant disposé sur un côté opposé dudit frein à disque, chaque cylindre servant à mettre en service une plaquette de frein respective pour freiner ledit frein à disque.

4. Unité de commande de broche porte-pièce selon la revendication 2, dans laquelle ledit moyen de serrage est entraîné par la pression d'un fluide d'entraînement qui l'alimente, ledit moyen de réglage de puissance comprenant un moyen de réglage de pression pour régler, par étapes discrètes, la pression dudit fluide d'entraînement qui alimente ledit moyen de serrage, ledit moyen de serrage étant relié par fluide audit moyen de réglage de pression pour l'alimentation dudit fluide d'entraînement à partir de ce dernier.

5. Unité de commande de broche porte-pièce selon la revendication 4, dans laquelle ledit moyen de réglage de pression comprend : un moyen de soupape réduisant la pression pour réduire la pression du fluide d'entraînement provenant d'une source de fluide d'entraînement; un premier moyen de soupape pour sélectionner, à des fins d'alimentation dudit moyen de serrage, soit un fluide d'entraînement sous pression réduite provenant dudit moyen de soupape de réduction de pression, soit un fluide d'entraînement provenant de la source de fluide d'entraînement; et un second moyen de soupape pour, soit alimenter le fluide d'entraînement sélectionné par ledit premier moyen de soupape à partir dudit premier moyen de soupape en direction dudit moyen de serrage, soit ne pas alimenter ledit moyen de serrage avec du fluide d'entraînement.

6. Unité de commande de broche porte-pièce selon l'une quelconque des revendications précédentes, comprenant en outre un moyen d'alimentation pour alimenter ledit moyen de serrage à l'aide d'un fluide de réduction de friction.

7. Procédé pour commander une broche porte-pièce (19) en combinaison avec un moteur (17) de broche porte-pièce possédant un couple de travail de régime normal, directement relié à ladite broche porte-pièce (19) pour entraîner ladite broche porte-pièce (19); un moyen (20) de détection d'angle de rotation pour détecter l'angle de rotation de ladite broche porte-pièce (19); un moyen de servocommande (16) pour régler l'angle de rotation de ladite broche porte-pièce (19) en commandant ledit moteur (17) de broche porte-pièce en réponse à un signal provenant dudit moyen de détection d'angle de rotation (20); et un moyen de serrage (11) pour serrer ladite broche porte-pièce (19) dans une condition d'arrêt ou pour faire tourner par friction ladite broche porte-pièce (19) avec un réglage angulaire en venant se mettre en contact avec ladite broche porte-pièce (19); comprenant les étapes consistant à :
(i) serrer ladite broche porte-pièce (19) et ledit moteur (17) de broche porte-pièce à l'aide dudit moyen de serrage (11) en entraînant ledit moyen de serrage (11);
(ii) régler l'angle de rotation de ladite broche porte-pièce (19) à l'aide dudit moyen de servocommande (16), tandis que ladite broche porte-pièce (19) et ledit moteur (17) de broche porte-pièce sont mis en contact par serrage avec ledit moyen de serrage (11) en réponse à un signal provenant dudit moyen (20) de détection d'angle de rotation pour maintenir ladite broche porte-pièce (19) à une position angulaire prédéterminée, caractérisé par le fait de
(iii) réduire le couple dudit moteur (17) de broche porte-pièce en dessous du couple de travail de régime normal dudit moteur (17) de broche porte-pièce, ce qui empêche la surchauffe du moteur (17) de broche porte-pièce.

8. Procédé pour commander une broche porte-pièce selon la revendication 7 et comprenant, en outre, les étapes consistant à :
(i) mettre en oeuvre une opération d'usinage sur ladite pièce maintenue par ladite broche porte-pièce lorsque le couple dudit moteur de broche porte-pièce est réduit en dessous du couple de travail de régime normal dudit moteur de broche porte-pièce; et
(ii) supprimer la limite imposée au couple dudit moteur de broche porte-pièce, ainsi que le contact de serrage avec ladite broche porte-pièce une fois que l'opération d'usinage sur ladite pièce est terminée.
